# EUROPEAN PATENT APPLICATION

(11) **EP 1 286 086 A2**
(43) Date of publication of application: **26.02.2003**
(21) Application number: 02018634.2
(22) Date of filing: 20.08.2002
(51) Int. Cl.: F16H 39/00

(54) **Hydrostatic transmission**

(30) Priority: 21.08.2001 US 314030 P
(71) Applicant: TECUMSEH PRODUCTS COMPANY, Tecumseh Michigan 49286 (US)
(72) Inventor: Jolliff, Norman E., 47167 Salem, Indiana (US); McDonner, Orville R., 47167 Salem, Indiana (US); Ruebusch, Richard T., 47150 New Albany, Indiana (US)
(74) Representative: Dr. Weitzel & Partner

(57) **Abstract**

A hydrostatic transmission (34, 35) including a variable displacement pump (56) including an input shaft (40) and a pump cylinder barrel rotatably coupled to the input shaft, the pump cylinder barrel having a plurality of cylinder chambers arranged in parallel with other and distributed about the input shaft axis of rotation. Each cylinder chamber has a reciprocating piston therein which bears against a pivotable swashplate, the displacement of the pump being varied in response to changes in the position of the swashplate. A gerotor motor (66) is attached to the pump and has an output shaft (128). The motor includes an engaged pair of inner (120) and outer (118) members, the outer member being eccentric relative to the inner member. The inner member is rotatably driven relative to the outer member by fluid received between the inner and outer members from the pump, the inner member being drivingly connected to the output shaft. A plurality of fluid conduits (58, 60) extend between the pump to the motor, through which the motor is in fluid communication with the pump.

## Description

The present invention relates to hydrostatic transmissions for use in lawn and garden implements, such as, for example, wide area and zero turn radius mowers, and garden tractors.

The use of hydrostatic transmissions including a system of communicating hydrostatic pumps and motors in lawn and garden implements is well-known with such hydrostatic systems often providing ease of control and component replacement. One prior art transmission, the Model 778 by Eaton Corporation, utilizes a ball piston pump and ball piston motor combination, and a set of double planetary reduction gears. Such reduction gearing usually requires additional moving parts which add cost and complexity to the hydrostatic transmission, could malfunction, and require packaging space within the transmission. Furthermore, the use of ball piston pumps and ball piston motors adds to the cost and complexity of the transmission, thereby increasing the cost and complexity of the implement in which the transmission is used. Additionally, the ball piston pump and ball piston motor combination is rather large, thereby failing to provide packaging flexibility desired by many manufacturers.

To solve the problem of a lack of packaging flexibility, other prior art transmissions use external hoses or tubes to allow fluid movement between the motor and the pump, as well as to and from the sump. However, the connection of the external hoses or tubes to the motor, pump, and sump creates junctions from which the fluid could easily leak, since those junctions may not have a tight seal between the hose and the motor, pump, or sump. An example of the problems resulting from such leakage is found when the prior art transmissions are used in a riding greens mower, which are typically used to maintain golf course greens. If the mower has connections that leak, the fluid may drip onto the green surface, thereby destroying a portion of the golf course green and requiring possibly thousands of dollars in repairs. Additional problems with the prior art transmissions and the leaking connections is the loss of fluid, thereby potentially allowing the operator to operate a hydrostatic transmission with low fluid levels and causing damage to the hydrostatic transmission. Thus, a hydrostatic transmission, which would minimize the connections, thereby minimizing the possibility of leaks therefrom, is desirable.

In response to the problem with leakage from the connections between the hoses or tubes and the transmission, prior art integrated hydrostatic transmissions were created which generally prevent leakage of fluid; however, these transmissions have the same problem as the Model 778 transmission, described above, in that they are rather large, expensive, and complex. Like the Model 778 transmission, the previous integrated transmissions cause the vehicles to be more expensive, more complex, and much larger to accommodate the transmission. Additionally, previous integrated hydrostatic transmissions may include reduction gearing, further increasing the cost and complexity of the transmission, as described above. Thus, prior art transmissions may solve one problem, that of leakage or the large size and lack of packaging flexibility, but not the other.

An additional problem experienced with some previous transmissions is that they were designed and manufactured differently to fit either a horizontal or a vertical shaft engine; a common transmission often could not be coupled to both types of engines. This inflexibility creates greater expense for the original equipment manufacturer (OEM) since the prior art hydrostatic transmissions may be used with only one type of engine, thereby requiring an OEM to have a supply of transmissions which work only with vertical shaft engines and a supply of transmissions which only work with horizontal shaft engines. Alternatively, the OEM may be limited to using only one type of engine in the lawn and garden products.

What would be desirable is a hydrostatic pump and motor system which is inexpensive and compact in design, and yet provides the flexibility of usage with a horizontal or vertical crankshaft engine. A hydrostatic pump and motor system which minimizes leakage and enables multiplication of torque and speed reduction without the use of reduction gearing is also desirable. Inclusion of a differential in such a pump and motor system would also be desirable.

In overcoming the problems of the prior art designs, the present invention provides a hydrostatic transmission which is inexpensive and compact in design since no reduction gearing is required, and which minimizes leakage since no additional hoses or tubes are required to connect the pump to the motor. Furthermore, the inventive transmission is modular and may be rotated 90° to accommodate either a vertical shaft or a horizontal shaft engine, thereby providing flexibility lacking in prior art transmissions.

The present invention provides a hydrostatic transmission including a variable displacement pump including an input shaft and a pump cylinder barrel rotatably coupled to the input shaft, the pump cylinder barrel having a plurality of cylinder chambers arranged in parallel with other and distributed about the input shaft axis of rotation. Each cylinder chamber has a reciprocating piston therein which bears against a pivotable swashplate, the displacement of the pump being varied in response to changes in the position of the swashplate. A gerotor motor is attached to the pump and has an output shaft. The motor includes an engaged pair of inner and outer members, the outer member being eccentric relative to the inner member. The inner member is rotatably driven relative to the outer member by fluid received between the inner and outer members from the pump, the inner member being drivingly connected to the output shaft. A plurality of fluid conduits extend between the pump to the motor, through which the motor is in fluid communication with the pump.

The present invention also provides for the orientation of the transmission during operation to be with its input shaft rotational axis being substantially vertical and its output shaft rotational axis being substantially horizontal, its input shaft rotational axis being substantially horizontal and its output shaft being substantially horizontal, or its input shaft rotational axis being substantially horizontal and its output shaft rotational axis being substantially vertical. Thus, the present invention provides a transmission which facilitates packaging flexibility.

The present invention also provides for its motor to be one of a plurality of interchangeable motors having different inner member lengths, the displacement of each interchangeable motor being different. Speed reduction between the pump's input shaft and the motor's output shaft may thus be altered by assembling a different one of the interchangeable motors to the pump.

The present invention further includes an axle housing attached to the pump and motor, the axle housing having an axle rotatably disposed therein which is operatively coupled to the motor output shaft.

The above mentioned and other features and objects of this invention will become more apparent and the invention itself will be better understood by reference to the following description of embodiments of the invention taken in conjunction with the accompanying drawings, wherein:
Figure 1 is a side view of a first embodiment of the inventive transmission;
Figure 2 is a top view of the transmission of Figure 1;
Figure 3 is a top view of the center section of the transmission of Figure 2;
Figure 4 is a front view of the transmission of Figure 2;
Figure 5 is a top view of an alternative embodiment of the inventive transmission of Figure 1;
Figure 6 is a sectional view of the motor of the transmission of Figure 2 along line 6-6, the motor being shown without the motor mounting surface;
Figure 7 is a view of the geroller stator and rotor of the motor of Figure 6;
Figure 8 is a view of a zero turn radius mower having a pair of the inventive transmissions therein;
Figure 9 is a top view of a transaxle incorporating the inventive transmission of Figure 1, the transmission being attached to an axle housing;
Figure 10 is a side view of the transaxle of Figure 9; and
Figure 11 is a view of a tractor having the inventive transaxle of Figure 9 therein.

Corresponding reference characters indicate corresponding parts throughout the several views. The exemplifications set out herein illustrate embodiments of the invention and such exemplifications are not to be construed as limiting the scope of the invention in any manner.

For the purposes of promoting an understanding of the principles of the invention, reference will now be made to the embodiments illustrated in the drawings and specific language will be used to describe the same. It will nevertheless be understood that no limitation of the scope of the invention is thereby intended.

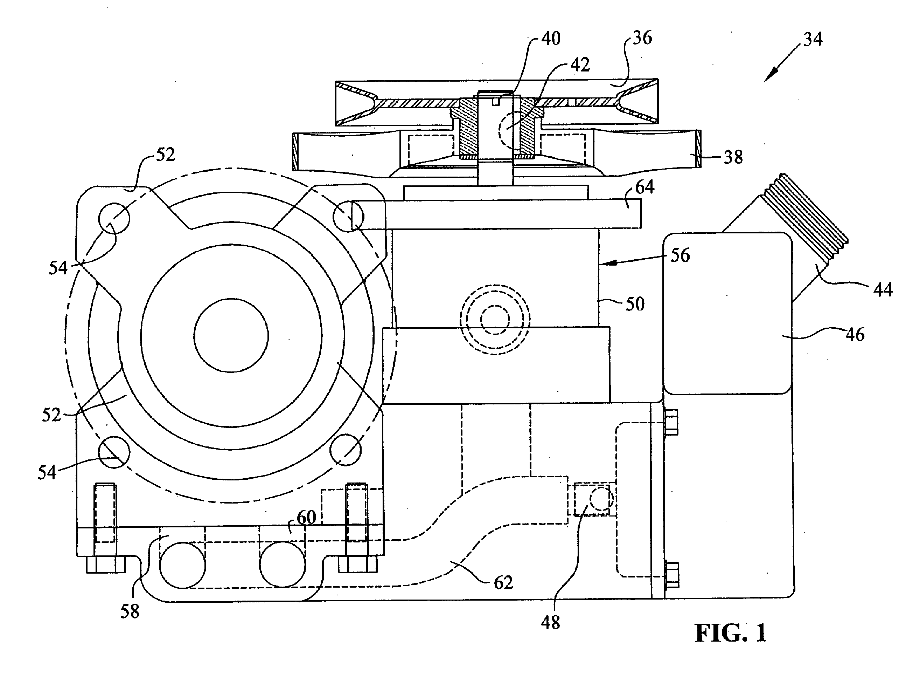

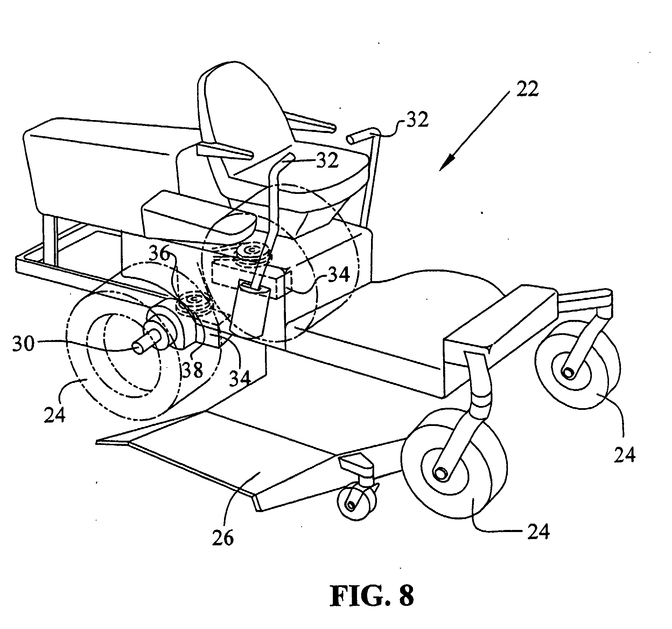

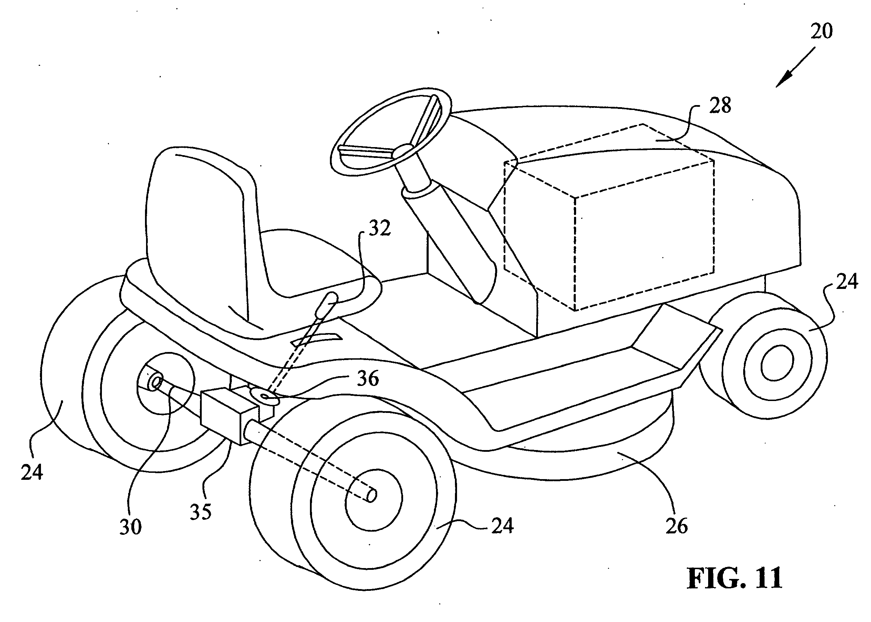

Referring first to Figure 1, inventive transmission 34 is shown in a side view. Transmission 34 includes pulley 36 and fan 38 keyed to input shaft 40 of pump 56 through key 42. Pulley 36 is in communication with the engine of an implement such as, for example, the mower of Figure 8 or the garden tractor of Figure 11, to provide drive input to pump 56. Pump 56, which is an axial piston pump, is disposed within housing 50 of transmission 34. Pump 56 includes a plurality of axially aligned cylindrical chambers with a reciprocating piston disposed in each chamber, as is known in the art. Such a pump is disclosed, for example, in U.S. Patents Nos. 6,301,885, issued October 6, 2001, 6,378,300, issued April 30, 2002, and 6,422,109, issued July 23, 2002, all of which are assigned to the assignee of the present invention, the complete disclosures of which are all expressly incorporated herein by reference. Included in housing 50 is flange 64 which extends beyond the outer edges of housing 50. Attached to housing 50, motor mounting surface 52 has a plurality of bores 54 for receipt of a plurality of bolts when a hydrostatic motor is mounted thereto.

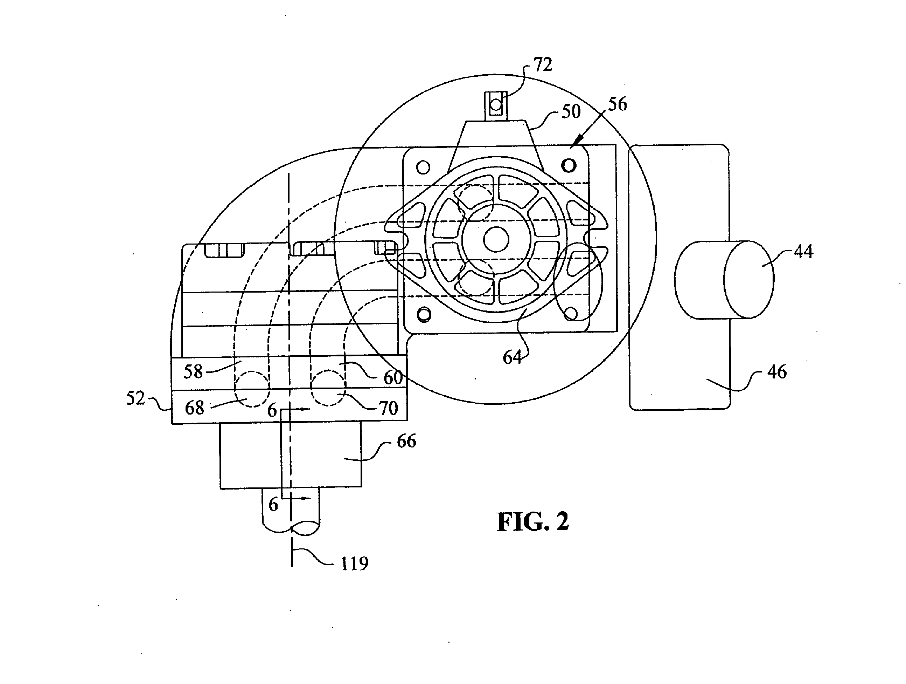

Attached to exterior of housing 50 of transmission 34 is fluid reservoir 46 having opening 44 through which fluid may be poured. A cap (not shown) is sealably closed onto opening 44. Fluid reservoir 46 serves to maintain a constant quantity of fluid moving throughout the fluid system of transmission 34, as is known in the art. Check valve 48 is located between the fluid system of transmission 34 and reservoir 46 to prevent fluid from entering reservoir 46 from the fluid circuit. The fluid system of transmission 34 includes two conduits or passages 58 and 60 from pump 56, which will be fluidly connected to a motor when the motor is mounted to motor mounting surface 52, such that displacement of fluid by pump 56 will force the fluid through passages 58 or 60 to the motor. The fluid system further includes passage 62 from passages 58 and 60 to valve 48. The displacement of pump 56, and which of fluid passages 58 and 60 fluid flows from the pump, is controlled by varying the angle of a swashplate assembly by rotating a control, or shift, lever attached to pump control shaft 72 (Figure 2), as is known in the art. The direction of rotation in which the motor is driven is dependent upon which of passages 58 and 60 fluid flows through from the pump to the motor. The rate at which the pumped fluid flows through the motor determines the speed of the motor.

With reference to Figure 2, a top view of transmission 34 is shown. Flange 64 further includes central bore 74 for receipt of pump input shaft 40. Further shown in this view, motor 66 has been attached to motor mounting surface 52 to provide a complete hydrostatic transmission 34. It is to be noted that passages 58 and 60 for fluid communication with motor 66 are curved in a 90° angle. Such casting may be done through one of a variety of known methods such as lost wax casting, sand casting or others. With the use of the conduits or passages in housing 50 of transmission 34, no hoses or tubes are needed to provide fluid communication between pump 56 and motor 66. Rather, motor 66 is directly mounted to motor mounting surface 52 thus placing pump 56 and motor 66 in fluid communication through passages 58 and 60, without the need for any additional or external tubing. If external tubing were to be used, leaks could occur at the junctions of the tubing and the pump and motor. However, such leaks are prevented as fluid flow occurs through the cast passages. Also shown at the respective ends of passages 58 and 60 are openings 68 and 70 which provide the direct fluid communication to motor 66.

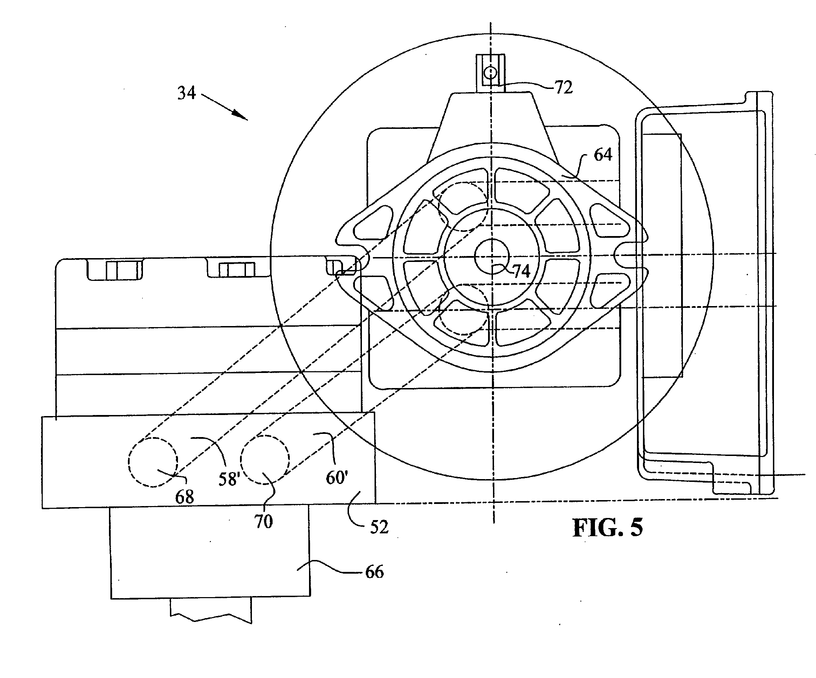

Straight passages 58' and 60' of the embodiment of transmission 34, shown in Figure 5, are cast or bored at approximately a 45° angle, relative to the front of transmission 34, from pump 56 to motor 66. Again with the 45° angle structure, no hoses or tubes are required and these passages may be cast within the housing of transmission 34. In either the embodiment with the curved 90° angle fluid passages 58 and 60, or the embodiment with the 45° angle fluid passages 58' and 60', hydrostatic fluid is passed between pump 56 and motor 66 for operation through these passages.

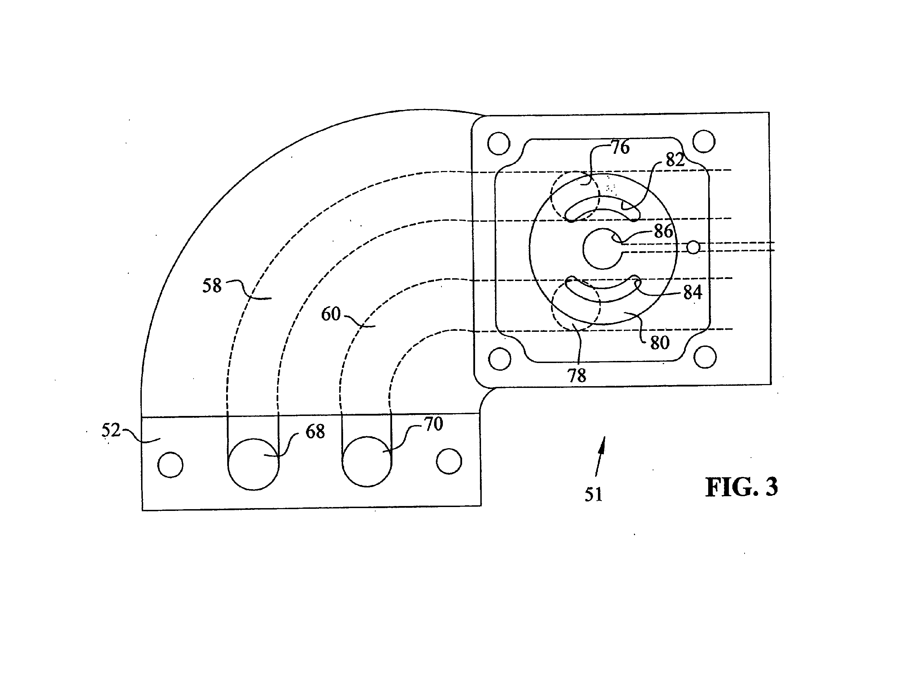

With reference to Figure 3, a view of center section 51 of transmission 34 is provided, and as such, pump 56, motor mounting surface 52, and motor 66 have been removed. Pump mounting surface 80 includes arcuate openings 82 and 84, as is generally known in the art, through which fluid flows to or from pump 56 through passages 58 and 60. Bore 86 is included in pump mounting surface 80 to allow insertion of pump input shaft 40. On the underside of pump mounting surface 80 are two passages 76 and 78 in communication with passages 58 and 60, respectively. In operation, pump 56 is mounted on pump mounting surface 80 and movement of a swash plate assembly (not shown) displaces fluid through arcuate openings 82 or 84 into passages 76 or 78. From passages 76 or 78, the fluid travels through passages 58 or 60, through openings 68 or 70, to motor 66 for operation of motor 66.

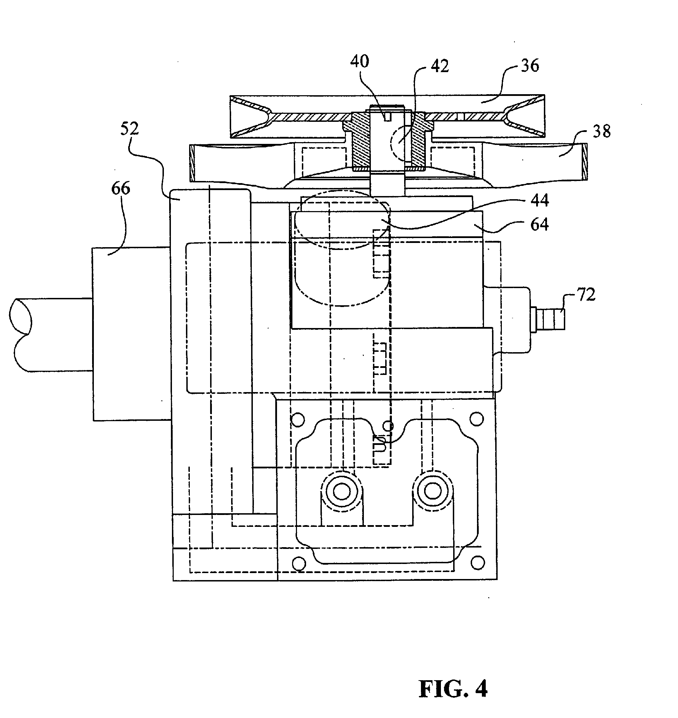

Referring now to Figure 4, a front view of transmission 34 is shown with both pump 56 and motor 66 attached. The operation of the swash plate assembly would be done in a known manner, whereby movement of the shift lever would cause the swash plate to pivot in either a forward or reverse direction. This movement causes the fluid in the fluid system of transmission 34 to move in a manner to convey a driving force to motor 66 in either the forward or reverse direction with varying the pressure of the fluid changing the output speed of the transmission.

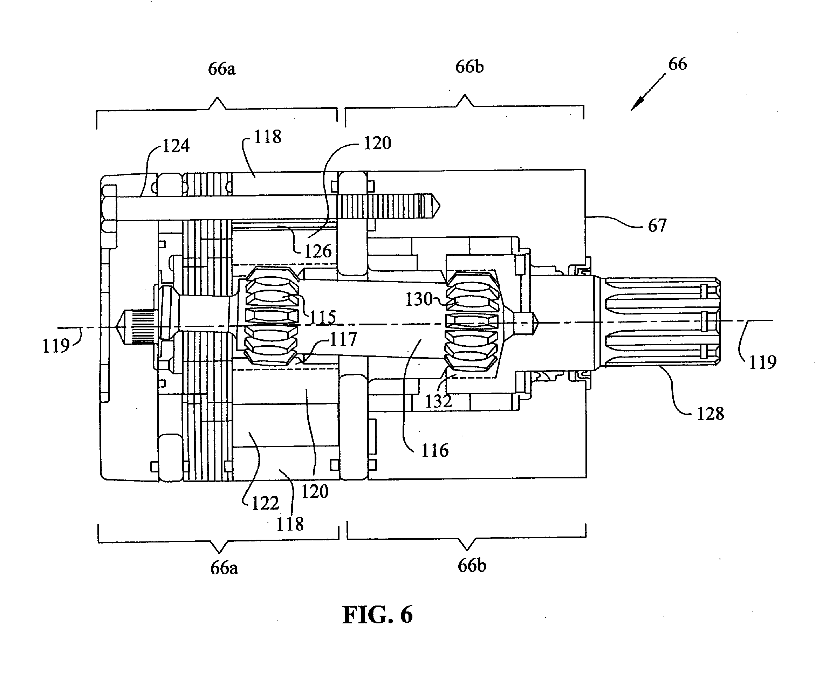

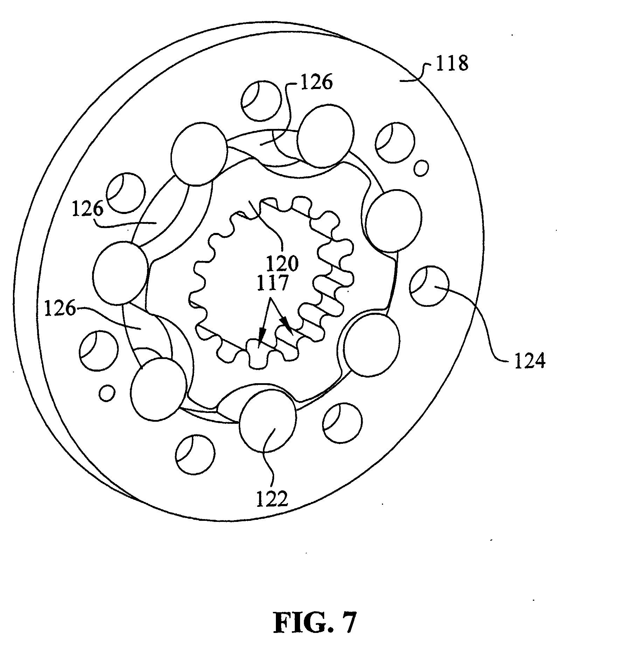

Referring now to Figures 6 and 7, a view of motor 66 and a perspective view of a section of motor 66 are shown. Motor 66 is a low speed, high torque motor, such as those disclosed in U.S. Patent Nos. 4,545,748 and 4,699,577, assigned to Parker-Hannifin Corporation, the complete disclosures of which are expressly incorporated herein by reference. Motor 66 may also be the commercially available TC Series Motor of the TorqlinkTM Series of motors, available from Parker-Hannifin Corporation of Greeneville, Tennessee. Alternatively, motor 66 may be a motor such as that disclosed in U.S. Patent No. 6,086,344, assigned to White Hydraulics, Inc, the complete disclosure of which is expressly incorporated herein by reference, or a commercially available RS or HB Series Motor, available from White Hydraulics, Inc. of Hopkinsville, Kentucky.

Motor 66 includes casing 67 and has at least one bore 124 therein for mounting of motor 66 to motor mounting surface 52. Further included in motor 66, specifically in first section 66a, is outer member or stator 118 having inner member or rotor 120 rotatably disposed therein. Stator 118 also includes rollers 122 which rotor 120 engages as rotor 120 rotates about axis 119 of stator 118. Such a structure may be the Roller Stator®, which is produced by White Hydraulics, Inc. of Hopkinsville, Kentucky, or another suitable geroller type of gerotor device. Alternatively, motor 66 may comprise a gerotor device that does not include rollers 122.

In first section 66a of motor 66 is wobble or "dog bone" shaft 116 which is fixedly engaged with rotor 120 through the intermeshing of teeth 115 and 117. Wobble shaft 116 further extends into second section 66b of motor 66 where it engages output shaft 128 through the intermeshing of teeth 130 and 132. Pressurized fluid flows from pump 56 and enters motor 66, specifically first section 66a, where it flows into varying size chambers 126 and causes rotor 120 to orbit about common axis 119 of stator 118 and output shaft 128 and to abut rollers 122 during the orbital motion. Through engagement with rotor 120, one end of wobble shaft 116, is orbiting axis 119 causing the other end to rotate, thereby rotating output shaft 128. Therefore, the orbital motion of rotor 120 is converted by the wobble shaft 116 into rotational motion of the output shaft 128. Output shaft 128 may serve as an axle, or drive a differential as described below.

It is to be noted that the length of motor 66 may be varied and the volume of cells 126 increased or decreased, thereby requiring more or less fluid from the fluid system to rotate motor 66. When more fluid is needed to rotate motor 66, more work is required, thus the input speed from input shaft 40 is greater than the axle speed resulting in speed reduction. When the volume of cells 126 is decreased, less fluid is used and the speed reduction will be decreased. Thus, by adjusting the length of motor 60, and in particular the axial lengths of outer and inner members 118, 120, an adjustment in the volume of cells 126 results. The speed reduction ratio between the input speed and the output speed at the axle may thus be adjusted to a desired ratio without the use of reduction gearing. One of ordinary skill in the art will now appreciate that different ones of a plurality of motors 60 having various length outer and inner members 118, 120 can be assembled to the pump to alter the speed reduction between the pump input shaft and the motor output shaft.

It is further to be noted that as input shaft 40 of pump 56 is at a 90° angle to the output shaft 128, transmission 34 may be rotated 90° to accommodate either a vertical shaft engine or a horizontal shaft engine.

With reference to Figure 8, zero turn radius mower 22 is shown as having a plurality of ground engaging wheels 24 and mower deck 26 mounted to the underside of the mower frame. Zero turn radius mower 22 utilizes two transmissions 34, each having an independent control mechanism 32 and associated with separate axles 30. Furthermore, each transmission 34 engages a separate axle 30 that is connected to a ground engaging wheel 24.

Although not shown, zero turn radius mower 22 may instead be a greens mower and utilize three separate motors 66 associated with each wheel 24 and a single pump, similar to pump 56, for all three motors 66 in place of a pump for each motor, as in the zero turn radius mower. The third wheel, at the rear of the mower, would be the drive wheel and would be moved by a control mechanism, such as a steering wheel, associated with the mower. Since the three motors 66, associated with the three wheels, share a common pump, all would be driven at the same speed and through the action of the rear drive wheel would move in the same direction.

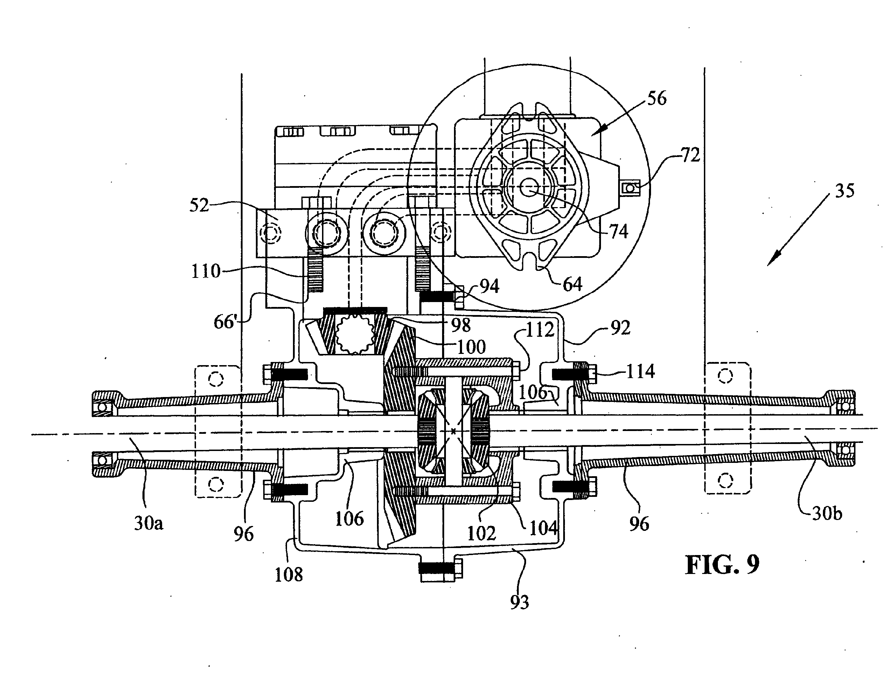

Referring now to Figure 9, a view of inventive transmission 34 is shown as a part of transaxle 35. Transmission 34 is connected to axle housing 92, which has two halves 93 and 108, to provide transaxle 35 as shown. As in the previously described embodiment, pump 56 is included and has flange 64 with bore 74 therein and pump control shaft 72 for attachment of a shift lever. Like motor 66, motor 66' is attached to motor mounting surface 52 through bolts 110 and is in fluid communication with pump 56; however, motor 66' differs from motor 66 of the previous embodiments in that bevel gear 98, rather than output shaft 128, extends therefrom. Bevel gear 98 has a portion within motor 66' (not shown) engaging wobble shaft 116 and intermeshes with another bevel gear 100 disposed within axle housing 92 and connected to differential housing 104 through bolts 112.

Within differential housing 104 is differential mechanism 102, which is of the type known in the art and is used to drive two axle portions 30a and 30b extending therefrom. Each axle portion 30a and 30b is supported by a boss 106, one of which is in each respective casing half 93 and 108. Axle portions 30a and 30b are further supported by casing 96 which is mounted to each respective casing half 93 and 108 by bolts 114. In operation, when pump 56 operates motor 66', bevel gear 98 rotates, thereby rotating bevel gear 100 to cause differential mechanism 102 to operate in a known manner and drive axles 30a and 30b.

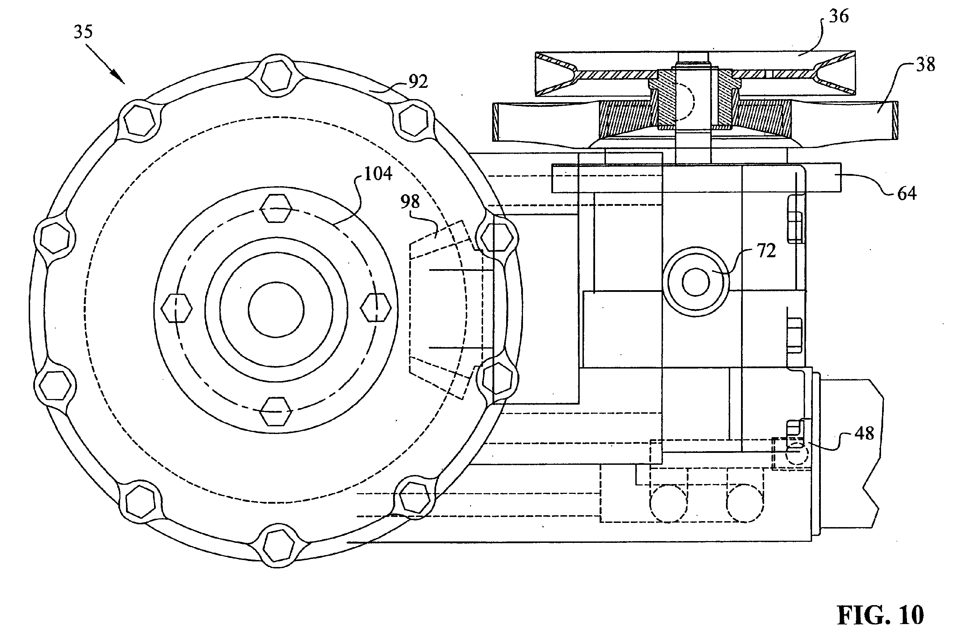

With reference to Figure 10, a side view of transaxle 35 of Figure 9 is shown. As can be seen, housing 92 requires a plurality of bolts to connect halves 93 and 108 together. It is also to be noted with reference to Figure 10 that with transmission 34 connected to axle housing 92 to create transaxle 35, transaxle 35, like transmission 34, is compact in size.

Referring to Figure 11, garden tractor 20 is shown as having engine 28 and transaxle 35 mounted in the frame of garden tractor 20. Garden tractor 20 further includes two pairs of ground engaging wheels 24 and mower deck 26 mounted on the underside of tractor 20. At the rear of garden tractor 20 is located transaxle 35 which drives two rear ground engaging wheels 24. Transaxle 35 is controlled by a single control lever 32 which engages the swash plate of pump 56 to vary the direction of motion and the speed of the transaxle.

While this invention has been described as having exemplary structures, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A hydrostatic transmission (34, 35) including a variable displacement pump (56) including an input shaft (40) having an axis of rotation, and a pump cylinder barrel rotatably coupled to said input shaft, said pump cylinder barrel having a plurality of cylinder chambers, said cylinder chambers being arranged in parallel with other and distributed about said input shaft axis of rotation, each said cylinder chamber having a reciprocating piston therein, and a pivotable swashplate against which said pistons bear, the displacement of said pump being varied in response to changes in the position of said swashplate; **characterized by** a gerotor motor (66) attached to said pump and having an output shaft (128), said output shaft having an axis of rotation, said motor including an engaged pair of inner (120) and outer (118) members, said inner member having an axial length, said outer member being eccentric relative to said inner member, said inner member being rotatably driven relative to said outer member by fluid received between said inner and outer members from said pump, said inner member being drivingly connected to said output shaft, and a plurality of fluid conduits (58, 60) extending between said pump to said motor and through which said motor is in fluid communication with said pump.

2. The transmission of claim 1, **characterized by** a wobble shaft (116) disposed between and engaging said motor inner member and said output shaft.

3. The transmission of claim 2, **characterized in that** said motor outer member is a nonrotatable stator.

4. The transmission of claim 1, **characterized by** a fluid reservoir (46) attached to said pump and containing hydrostatic fluid, hydrostatic fluid being received into said fluid conduits from said reservoir.

5. The transmission of claim 1, **characterized in that** said motor is one of a plurality of interchangeable motors having different inner member lengths, the displacement of each said interchangeable motor being different, whereby motor output shaft speed reduction relative to said pump input shaft speed is altered through assembly of a different one of said plurality of interchangeable motors to said pump.

6. The transmission of claim 1, **characterized by** an axle housing (92) attached to said pump and motor, said axle housing having an axle (30a, 30b) rotatably disposed therein, said axle operatively coupled to said output shaft.

7. The transmission of claim 6, **characterized by** a differential mechanism (102) disposed within said axle housing, said axle being operatively coupled to said output shaft through said differential mechanism.

8. The transmission of claim 6, **characterized in that** the orientation of said transmission during operation may be such that either said input shaft rotational axis is substantially vertical and said axle is substantially horizontal, or that said input shaft rotational axis is substantially horizontal and said axle is substantially horizontal.

9. The transmission of claim 1, **characterized in that** the rotational axes of said pump input shaft and said motor output shaft are oriented substantially perpendicularly relative to each other.

10. The transmission of claim 9, **characterized in that** the orientation of said transmission during operation may be either that said input shaft rotational axis is substantially vertical and said output shaft rotational axis is substantially horizontal, or that said input shaft rotational axis is substantially horizontal and said output shaft is substantially horizontal, or that said input shaft rotational axis is substantially horizontal and said output shaft rotational axis is substantially vertical.
